# EUROPEAN PATENT APPLICATION

(11) **EP 4 826 138 A1**
(43) Date of publication of application: **21.10.2026**
(21) Application number: 26156479.3
(22) Date of filing: 04.02.2026
(51) Int. Cl.: C25D 3/66, C25D 5/54, C25D 7/00, C25D 17/02, G02F 1/1506

(54) **REVERSIBLE METAL DEPOSITION DEVICE**

(30) Priority: 15.04.2025 US 202519179408
(71) Applicant: The Boeing Company, Arlington, VA 22202 (US)
(72) Inventor: GROSS, Adam Franklin, Arlington, 22202 (US); VAJO, John James, Arlington, 22202 (US); LIPTON, Jason Samuel, Arlington, 22202 (US); KLEIN, Shirell Eliezra, Arlington, 22202 (US); WANG, Xiaoxi, Arlington, 22202 (US); PALMQUIST, Mark Steven, Arlington, 22202 (US)
(74) Representative: Bryn-Jacobsen, Caelia

(57) **Abstract**

Reversible metal deposition devices are presented. A reversible metal deposition device comprises a transparent conductive electrode, a counter electrode, an electrolyte between the transparent conductive electrode and the counter electrode, a stripping additive in the electrolyte, and metal salt in the electrolyte that supplies metal to be reversibly deposited onto the transparent conductive electrode. The electrolyte contains less than 5 atomic percent water. The stripping additive comprises at least one of an acid or a base.

## Description

### BACKGROUND INFORMATION

### 1. Field:

The present disclosure relates generally to reversible metal deposition devices.

### 2. Background:

It may be desirable to have electrically dimming windows in transportation vehicles such as aircraft. Many technologies exist for electrically dimming windows. In liquid crystal windows, power is applied continuously in the light-transmitting state. Charged particle devices like e-ink have a haze or distortion of the image through the window. Traditional electrically darkening windows absorb light in the dark state. Absorption of heat results in the windows heating up and radiating heat into the passenger compartment when exposed to sunlight. Radiating heat into the cabin can cause additional fuel use and discomfort in the vehicle.

Therefore, it would be desirable to have a method and apparatus that takes into account at least some of the issues discussed above, as well as other possible issues.

### SUMMARY

An example of the present disclosure provides a reversible metal deposition device. The reversible metal deposition device comprises a transparent conductive electrode, a counter electrode, an electrolyte between the transparent conductive electrode and the counter electrode, a stripping additive in the electrolyte, and metal salt in the electrolyte that supplies metal to be reversibly deposited onto the transparent conductive electrode. The electrolyte contains less than 5 atomic percent water. The stripping additive comprises at least one of an acid or a base.

An example of the present disclosure provides a reversible metal deposition device. The reversible metal deposition device comprises a transparent conductive electrode comprising one of a glass sheet or a polymer sheet, a counter electrode, an electrolyte between the transparent conductive electrode and the counter electrode, a stripping additive in the electrolyte, metal salt in the electrolyte that supplies metal to be reversibly deposited onto the transparent conductive electrode, and a second substrate comprising a second glass sheet or a second polymer sheet. The electrolyte contains less than 5 atomic percent water. The stripping additive comprises an acid.

An example of the present disclosure provides a reversible metal deposition device. The reversible metal deposition device comprises a transparent conductive electrode, a counter electrode, an electrolyte in contact with the transparent conductive electrode, metal salt in the electrolyte that supplies metal to be reversibly deposited onto the transparent conductive electrode, and a stripping additive in the electrolyte. The stripping additive comprises at least one of an acid or a base configured to stop passivation of a metal layer formed on the transparent conductive electrode when the metal is deposited on the transparent conductive electrode. The electrolyte contains less than 5 atomic percent water. The metal salt comprises one of copper or silver.

The features and functions can be achieved independently in various examples of the present disclosure or may be combined in yet other examples in which further details can be seen with reference to the following description and drawings.

### BRIEF DESCRIPTION OF THE DRAWINGS

The novel features believed characteristic of the illustrative examples are set forth in the appended claims. The illustrative examples, however, as well as a preferred mode of use, further objectives and features thereof, will best be understood by reference to the following detailed description of an illustrative example of the present disclosure when read in conjunction with the accompanying drawings, wherein:
**Figure 1** is an illustration of an aircraft in accordance with an illustrative example;
**Figures 2A** and **2B** is an illustration of a block diagram of a manufacturing environment in accordance with an illustrative example;
**Figure 3** is an illustration of a cross-sectional view of a reversible metal deposition device in accordance with an illustrative example;
**Figure 4** is an illustration of a cross-sectional view of a reversible metal deposition device in accordance with an illustrative example;
**Figure 5** is an illustration of a graph of dynamic optical transmittance measurements over time without a stripping additive;
**Figure 6** is an illustration of a graph of dynamic optical transmittance measurements over time in accordance with an illustrative example;
**Figure 7** is an illustration of an aircraft manufacturing and service method in a form of a block diagram in accordance with an illustrative example; and
**Figure 8** is an illustration of an aircraft in a form of a block diagram in which an illustrative example may be implemented.

### DETAILED DESCRIPTION

The illustrative examples recognize and take into account several considerations. The illustrative examples recognize and take into account that traditional electrochromics absorb light in the dark state. The illustrative examples recognize and take into account that absorbing light results in the electrochromics heating up and radiating heat into the passenger compartment when exposed to sunlight. The illustrative examples recognize and take into account that this heat requires more cooling and thus energy to be used, which comes from the vehicle's fuel.

The illustrative examples recognize and take into account that metal deposition devices deposit a layer of metal on a transparent conductive electrode. They create a mirror-like surface that reflects light instead of absorbing it. The illustrative examples recognize and take into account that conventional metal deposition devices use an aqueous electrolyte that supports the dissolution of metal ions. The illustrative examples recognize and take into account that an aqueous electrolyte helps the metal layer dissolve when directed to change to a transparent state. The illustrative examples recognize and take into account that a water-based electrolyte creates unwanted vapor pressure at high temperatures that will break open the device. The illustrative examples recognize and take into account that during operation, aerospace windows are exposed to high and low temperatures. The illustrative examples recognize and take into account that aerospace windows are desirably designed to endure both high and low temperatures. The illustrative examples recognize and take into account that some non-aqueous electrolyte based devices use a chemical couple (cycles between two oxidation states) on the anode for dissolving away the plated metal. The illustrative examples recognize and take into account that for non-aqueous electrolyte based devices using a chemical couple on the anode, a power off hold is not possible.

The illustrative examples present a reversible metal deposition device with stripping enhancing non-aqueous electrolyte. The illustrative examples present an electrochemical device that reversibly plates metal on an internal surface to control the reflection of light off that surface. The reversible metal deposition device has a non-aqueous electrolyte, which enables the metal deposition devices to operate in a wider temperature range than aqueous electrolytes. Non-aqueous electrolytes can have decreased vapor pressures in comparison to aqueous electrolytes. The illustrative examples present a stripping additive in the non-aqueous electrolyte. Plated metal films are more stable in a non-aqueous electrolyte than in an aqueous electrolyte. Stripping of the metal films can be slowed or halted in the non-aqueous electrolyte. Adding a stripping additive of at least one of an acid or a base creates stripping conditions that promote the stripping of metal off the electrode. The stripping additive allows the reversible metal deposition device to cycle.

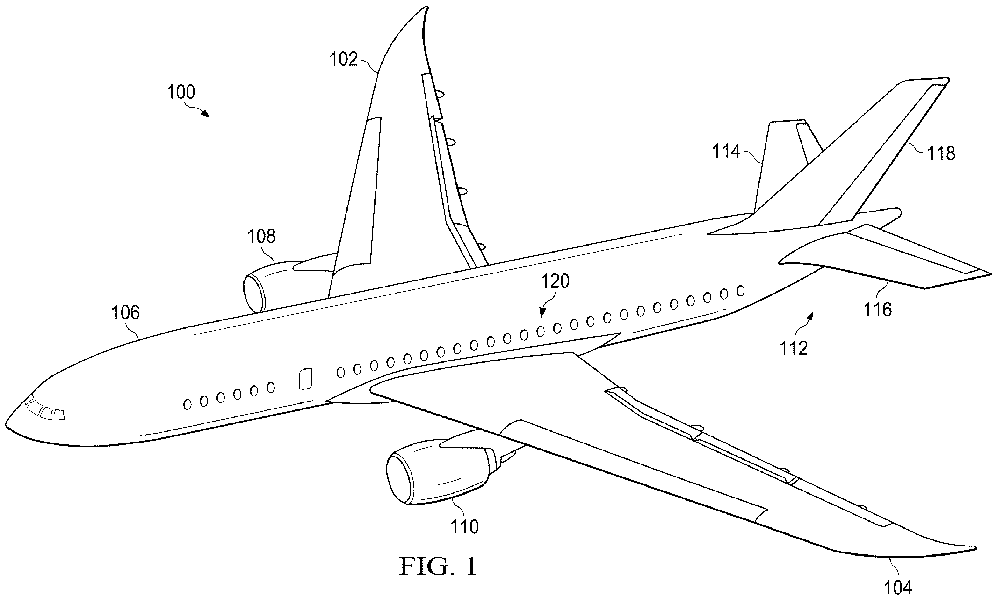

Turning now to **Figure 1****,** an illustration of an aircraft is depicted in accordance with an illustrative example. Aircraft **100** has wing **102** and wing **104** attached to body **106.** Aircraft **100** includes engine **108** attached to wing **102** and engine **110** attached to wing **104.**

Body **106** has tail section **112.** Horizontal stabilizer **114,** horizontal stabilizer **116,** and vertical stabilizer **118** are attached to tail section **112** of body **106.**

Plurality of windows **120** is present in body **106.** Plurality of windows **120** allows passengers in body of aircraft **100** to view outside of aircraft **100.**

Aircraft **100** is an example of an aircraft that can have reversible metal deposition devices. In this illustrative example, plurality of windows **120** can be formed of a plurality of reversible metal deposition devices.

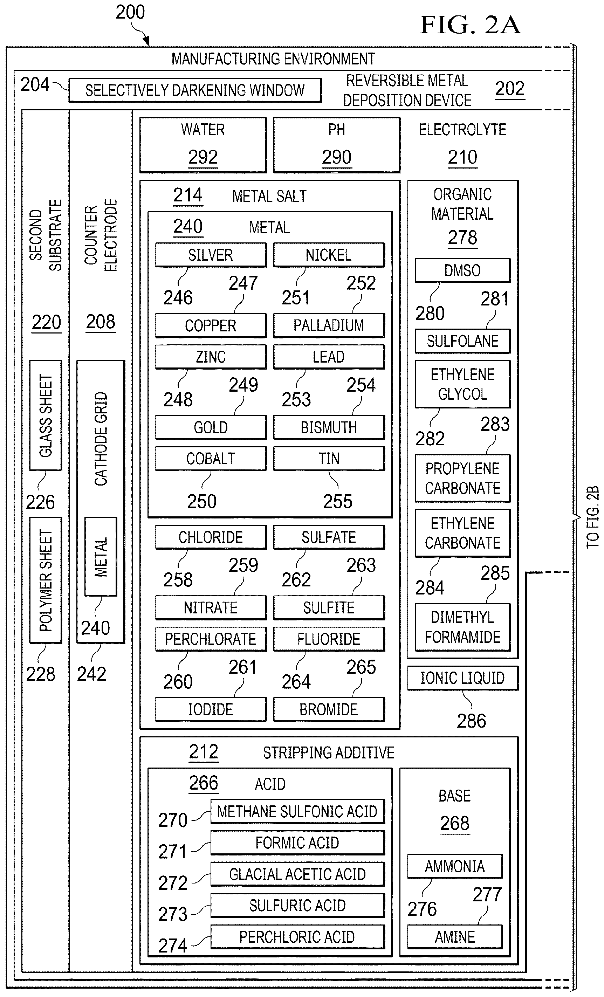

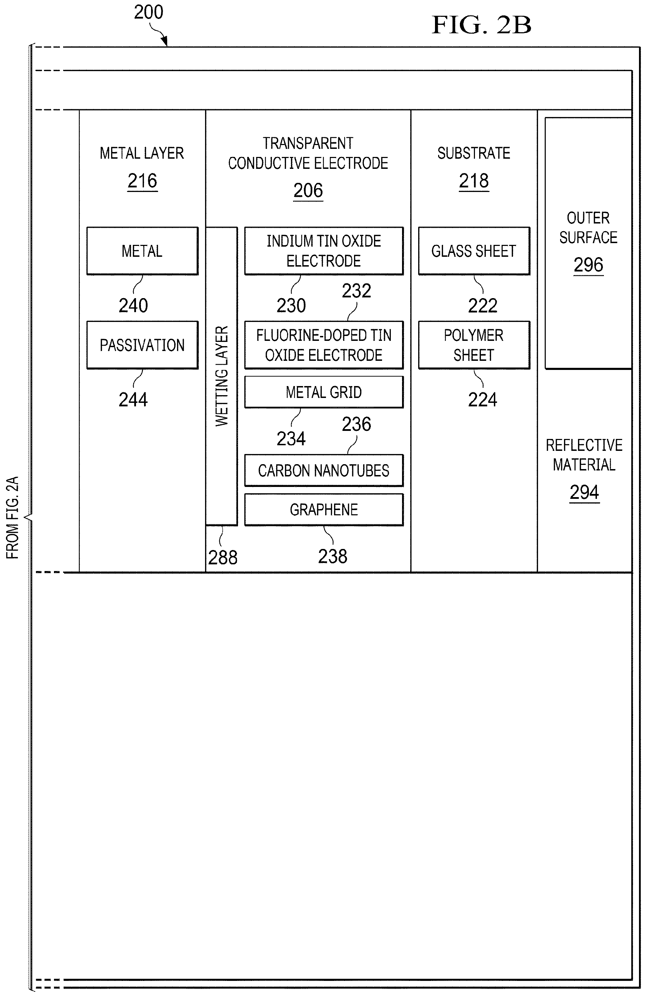

Turning now to **Figures 2A** and **2B****,** an illustration of a block diagram of a manufacturing environment is depicted in accordance with an illustrative example. Reversible metal deposition device **202** can be formed in manufacturing environment **200.** Reversible metal deposition device **202** can be used as a window of plurality of windows **120** of aircraft **100** of **Figure 1****.**

Reversible metal deposition device **202** comprises a non-aqueous electrolyte, electrolyte **210.** Electrolyte **210** provides a temperature stability to reversible metal deposition device **202.**

Stripping additive **212** is added to electrolyte **210** to enable repeated dissolving of metal layer **216.** Stripping additive **212** is added to electrolyte **210** so that stripping additive **212** breaks down passivation **244** layer of metal layer **216** upon application of an electric potential. Reversible metal deposition device **202** has a power off hold.

Passivation **244** would stop metal **240** from dissolving into electrolyte **210** and stop reversible metal deposition device **202** from cycling. By including stripping additive **212** in electrolyte **210,** pH **290** of electrolyte **210** is modified. By modifying pH **290** of electrolyte **210,** ions of metal **240** become stable, such that metal layer **216** can dissolve into electrolyte **210.**

Reversible metal deposition device **202** comprises transparent conductive electrode **206,** counter electrode **208,** electrolyte **210** between transparent conductive electrode **206** and counter electrode **208,** stripping additive **212** in electrolyte **210,** and metal salt **214** in electrolyte **210** that supplies metal **240** to be reversibly deposited onto transparent conductive electrode **206.** Electrolyte **210** contains less than 5 atomic percent water **292.** Stripping additive **212** comprises at least one of acid **266** or base **268.** The at least one of acid **266** or base **268** is not an aqueous solution.

Metal salt **214** in electrolyte **210** can be used to reversibly deposit metal **240** on to transparent conductive electrode **206.** In some illustrative examples, metal salt **214** comprises one of silver **246,** copper **247,** zinc **248,** gold **249,** cobalt **250,** nickel **251,** palladium **252,** lead **253,** bismuth **254,** or tin **255.** In some illustrative examples, metal salt **214** comprises one of aluminum, iron, gallium, indium, platinum, or tungsten. In some illustrative examples, metal salt **214** comprises one of silver **246,** copper **247,** zinc **248,** gold **249,** cobalt **250,** nickel **251,** palladium **252,** lead **253,** bismuth **254,** tin **255,** aluminum, iron, gallium, indium, platinum, or tungsten.

Metal **240** can take the form of any desirable metal. In some illustrative examples, metal **240** can be selected based on at least one of percent light reflection or percent light absorption. Metal **240** is desirably more highly reflective and less absorbative. In some illustrative examples, metal **240** is selected based on electrochemical potential. Selection of metal **240** based on electrochemical potential can utilize lower levels of power for plating and stripping. In some illustrative examples, metal salt **214** comprises one of copper **247** or silver **246.**

In some illustrative examples, metal salt **214** comprises one of chloride **258,** nitrate **259,** perchlorate **260,** sulfate **262,** sulfite **263,** fluoride **264,** iodide **261,** or bromide **265.** In some illustrative examples, metal salt **214** takes the form of perchlorate **260.**

Electrolyte **210** can take any desirable form. In some illustrative examples, electrolyte **210** comprises organic material **278** selected from one of DMSO **280,** sulfolane **281,** ethylene glycol **282,** propylene carbonate **283,** ethylene carbonate **284,** or dimethyl formamide **285.** In some illustrative examples, electrolyte **210** comprises organic material **278** as a solvent. In some illustrative examples, electrolyte **210** further comprises a dissolved salt in addition to organic material **278.** In some illustrative examples, electrolyte **210** further comprises lithium chloride as a dissolved salt in addition to organic material **278.** In some illustrative examples, electrolyte **210** comprises at least one of DMSO **280** or propylene carbonate **283.** In some illustrative examples, electrolyte **210** comprises ionic liquid **286.** In some illustrative examples, electrolyte **210** comprises at least one of imidazolium, ammonium, pyrrolidinium, sulfonium, phosphonium, pyrazolidium, piperidinium, pyridinium, TFSI, hexafluorophosphate, bisnonafluoro-1-butanesulfonimidate, perchlorate, chloride, thiocyanate, DFOB, nitrate, tetra fluoroborate, or triflate. In some illustrative examples, electrolyte **210** comprises at least one cation and at least one anion.

Electrolyte **210** can be referred to as a non-aqueous electrolyte. In some illustrative examples, electrolyte **210** comprises less than 4 atomic percent water **292.** In some illustrative examples, electrolyte **210** comprises less than 3 atomic percent water **292.** In some illustrative examples, electrolyte **210** comprises less than 2 atomic percent water **292.** In some illustrative examples, electrolyte **210** comprises less than 1 atomic percent water **292.** In some illustrative examples, electrolyte **210** comprises less than 0.5 atomic percent water **292.** In some illustrative examples, electrolyte **210** comprises less than 100 parts per million water **292.**

Stripping additive **212** is selected based on type of metal **240.** In some illustrative examples, stripping additive **212** comprises at least one of methane sulfonic acid **270,** formic acid **271,** glacial acetic acid **272,** sulfuric acid **273,** or perchloric acid **274.** In some illustrative examples, stripping additive **212** comprises at least one of ammonia **276** or amine **277.**

In some illustrative examples, transparent conductive electrode **206** comprises one of indium tin oxide electrode **230** or a fluorine-doped tin oxide electrode **232** on substrate **218,** wherein substrate **218** is a glass sheet **222** or a polymer sheet **224.** In some illustrative examples, transparent conductive electrode **206** comprises metal grid **234** on substrate **218,** wherein substrate **218** is glass sheet **222** or polymer sheet **224.** In some illustrative examples, transparent conductive electrode **206** comprises at least one of graphene **238** or carbon nanotubes **236** on substrate **218,** wherein the substrate **218** is glass sheet **222** or polymer sheet **224.**

In some illustrative examples, reversible metal deposition device **202** further comprises wetting layer **288** on transparent conductive electrode **206.** In some illustrative examples, wetting layer **288** is a metal comprising at least one of platinum, gold, iridium, or palladium. In some illustrative examples, wetting layer **288** is non-metallic. In some illustrative examples, wetting layer **288** is made by treating transparent conductive electrode **206** with ozone, UV, plasma, or a corona treatment. In some illustrative examples, wetting layer **288** is an oxide. In some illustrative examples, wetting layer **288** is made by treating transparent conductive electrode **206** with at least one of flame treatment, chemical etching, vapor degreasing, or laser ablation. In some illustrative examples, wetting layer **288** is a surfactant or self-assembled monolayer.

In some illustrative examples, counter electrode **208** comprises cathode grid **242.** In some illustrative examples, counter electrode **208** takes the form of a transparent conductive electrode.

In some illustrative examples, reversible metal deposition device **202** is selectively darkening window **204.** In some illustrative examples, selectively darkening window **204** further comprises reflective material **294** on outer surface **296** of selectively darkening window **204.** In some illustrative examples, reflective material **294** can be at least one of broadband reflective, UV reflective, or near infrared reflective.

In some illustrative examples, reversible metal deposition device **202** takes the form of selectively darkening window **204.** Selectively darkening window **204** comprises substrate **218** and second substrate **220.** In some illustrative examples, second substrate **220** comprises either glass sheet **226** or polymer sheet **228.** Second substrate **220** contains electrolyte **210** in reversible metal deposition device **202.**

The illustration of manufacturing environment **200** in **Figure 2** is not meant to imply physical or architectural limitations to the manner in which an illustrative example may be implemented. Other components in addition to or in place of the ones illustrated may be used. Some components may be unnecessary. Also, the blocks are presented to illustrate some functional components. One or more of these blocks may be combined, divided, or combined and divided into different blocks when implemented in an illustrative example.

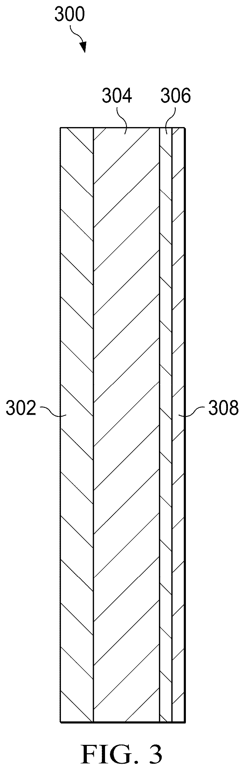

Turning now to **Figure 3****,** an illustration of a cross-sectional view of a reversible metal deposition device is depicted in accordance with an illustrative example. Reversible metal deposition device **300** can be used in a window of plurality of windows **120** of aircraft **100** in **Figure 1****.** Reversible metal deposition device **300** can be a physical implementation of reversible metal deposition device **202** of **Figure 2****.**

Reversible metal deposition device **300** comprises transparent conductive electrode **308,** counter electrode **302,** electrolyte **304** between transparent conductive electrode **308** and counter electrode **302,** stripping additive (not depicted) in electrolyte **304,** and metal salt in electrolyte **304** that supplies metal to be reversibly deposited onto transparent conductive electrode **308.** As depicted, the metal is present in metal layer **306** against transparent conductive electrode **308.** In this illustrative example, metal layer **306** comprises plated metal for light rejection. Transparent conductive electrode **308** can be referred to as a wetting electrode. In this illustrative example, metal layer **306** against transparent conductive electrode **308** presents a dark state.

In this illustrative example, electrolyte **304** contains less than 5 atomic percent water. Electrolyte **304** can also be referred to as a deposition mediating non-aqueous electrolyte. In this illustrative example, the stripping additive comprises at least one of an acid or a base.

As depicted, counter electrode **302** takes the form of a cathode grid formed of a same metal as the metal in metal layer **306.** By the cathode grid being formed of the same metal as metal layer **306,** operation of reversible metal deposition device **300** can be done with a lower power.

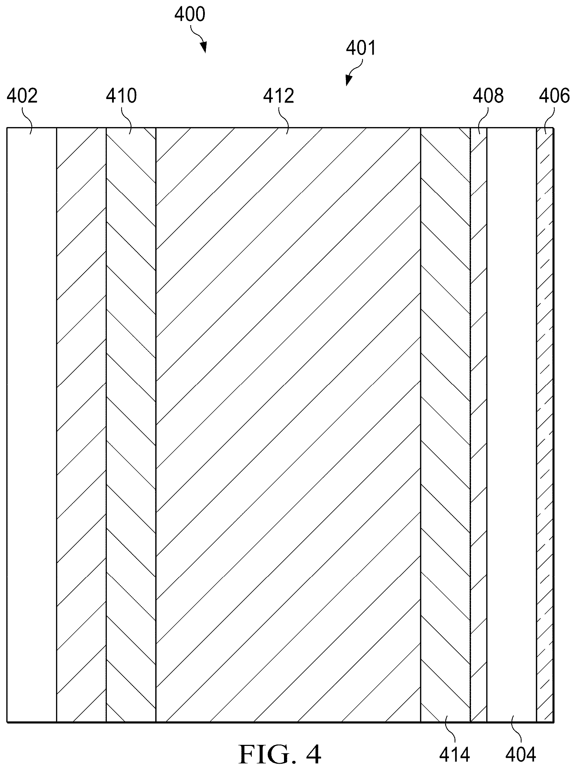

Turning now to **Figure 4****,** an illustration of a cross-sectional view of a reversible metal deposition device is depicted in accordance with an illustrative example. Reversible metal deposition device **400** can be used in a window of plurality of windows **120** of aircraft **100** in **Figure 1****.** Reversible metal deposition device **400** can be a physical implementation of reversible metal deposition device **202** of **Figure 2****.**

In this illustrative example, reversible metal deposition device **400** takes the form of selectively darkening window **401.** Selectively darkening window **401** comprises substrate **404** and second substrate **402.** Each of substrate **404** and second substrate **402** comprises either a glass sheet or a polymer sheet. In this illustrative example, reflective material **406** is present on substrate **404.** Reflective material **406** is optional. Reflective material **406** can reflect sunlight to reduce the amount of sunlight entering selectively darkening window **401.**

Reversible metal deposition device **400** comprises transparent conductive electrode **408,** counter electrode **410,** electrolyte **412** between transparent conductive electrode **408** and counter electrode **410,** stripping additive (not depicted) in electrolyte **412,** and metal salt in electrolyte **412** that supplies metal to be reversibly deposited onto transparent conductive electrode **408.** As depicted, the metal is present in metal layer **414** against transparent conductive electrode **408.** In this illustrative example, metal layer **414** comprises plated metal for light rejection. Transparent conductive electrode **408** can be referred to as a wetting electrode. In this illustrative example, metal layer **414** against transparent conductive electrode **408** presents a dark state.

In this illustrative example, electrolyte **412** contains less than 5 atomic percent water. Electrolyte **412** can also be referred to as a deposition mediating non-aqueous electrolyte. In this illustrative example, the stripping additive comprises at least one of an acid or a base.

As depicted, counter electrode **410** takes the form of a cathode grid formed of a same metal as the metal in metal layer **414.** By the cathode grid being formed of the same metal as metal layer **414,** operation of reversible metal deposition device **400** can be done with a lower power. In some illustrative examples, counter electrode **410** takes the form of a grid with a core formed of an inert metal plated with a coating of the same metal as the metal in metal layer **414.**

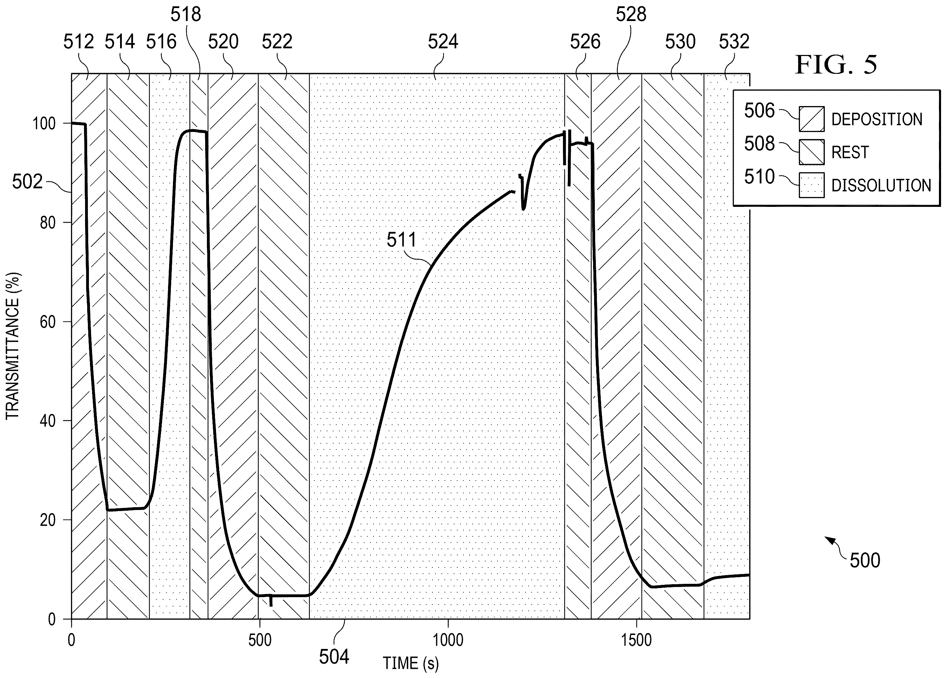

Turning now to **Figure 5****,** an illustration of a graph of dynamic optical transmittance measurements over time without a stripping additive is depicted. Graph **500** presents data for a reversible metal deposition device without a stripping additive. More specifically, graph **500** presents dynamic optical transmittance measurements during reversible electroplating and dissolution of Cu onto ITO in an ethylene glycol-based electrolyte with no introduced acid or base. Transmittance is reduced as a copper film forms and recovers as it is dissolved.

Graph **500** has y-axis **502** of transmittance in percentage and x-axis **504** of time in seconds. Three different stages of operation, deposition **506,** rest **508,** and dissolution **510** are depicted in graph **500.** During deposition **506,** an applied voltage deposits the metal into a metal layer. During rest **508,** the current state is maintained. During dissolution **510,** a polarity of the applied voltage is reversed, to dissolve the copper. Data **511** presents measurements of transmittance for the reversible metal deposition device without a stripping additive.

At time zero, deposition **512** begins. After deposition, rest **514** maintains a metal layer to reduce transmittance. During the first dissolution, dissolution **516,** the copper dissolves over about **100** seconds. After rest **518,** the copper is deposited to form a metal layer in deposition **520.** The system rests during rest **522.** Following rest **522,** dissolution **524** is substantially slower than dissolution **516.**

An electrochromic without acid does not stably cycle. Slow stripping starting at approximately **600** seconds can be seen in dissolution **524.** Following rest **526,** the metal is redeposited during deposition **528.** Following rest **530,** dissolution **532** begins. No stripping is depicted after **1500** seconds. The slow stripping in dissolution **524** and failure to strip in dissolution **532** is due to the passivation of the metal layer.

Electrochemical deposition and dissolution of Cu in ethylene glycol (EG) -based electrolyte is shown in **Figure 5****.** The set-up consists of an electrochemical cell with a quartz window for probing transmission during illumination. Indium tin oxide (ITO) is used as the transparent working electrode (WE) with a Cu counter electrode in a 2-electrode format. The electrolyte consists of 0.1 M CuClO₄ as a Cu source and 1 M LiClO₄ as a supporting electrolyte dissolved in ethylene glycol. Upon applying a reducing voltage to the ethylene glycol, Cu is plated onto the indium tin oxide layer, resulting in reduced transmittance. After a brief rest, an oxidizing voltage is applied to the transparent working electrode to electrochemically dissolve the Cu metal layer, resulting in increased transmittance. However, after the first cycle, shown in deposition **512,** rest **514,** and dissolution **516,** the oxidizing voltage is slower to dissolve the Cu metal. In the third cycle, shown in deposition **528,** rest **530,** and dissolution **532,** it does not dissolve the metal layer, so transmission does not recover.

Failure to dissolve in dissolution **532** is due to the formation of a passivating layer on the surface of the copper. In the neutral pH range at oxidizing voltage, Cu forms Cu₂O or Cu(OH)₂. Neither species is soluble in EG, so a thin passivating surface is formed on the Cu deposit. The thin passivating surface prevents further dissolution.

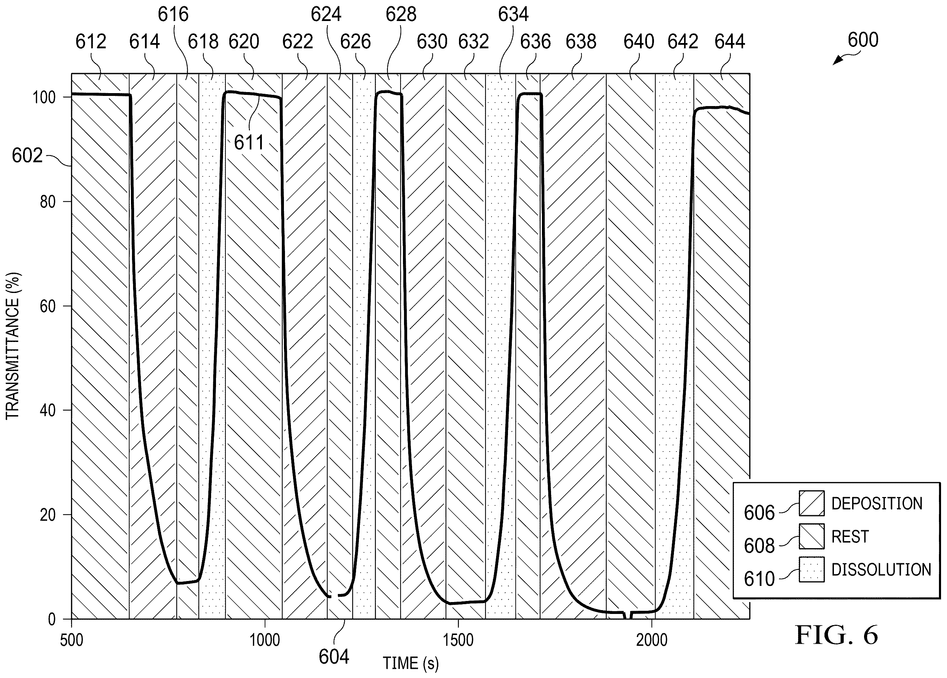

Turning now to **Figure 6****,** an illustration of a graph of dynamic optical transmittance measurements over time is depicted in accordance with an illustrative example. Graph **600** can be a graph of dynamic optical transmittance measurements for a window of plurality of windows **120** in aircraft **100** of **Figure 1****.** Graph **600** can be a graph of dynamic optical transmittance measurements for reversible metal deposition device **202** of **Figure 2****.** Graph **600** can be a graph of dynamic optical transmittance measurements for reversible metal deposition device **300** of **Figure 3****.** Graph **600** can be a graph of dynamic optical transmittance measurements for reversible metal deposition device **400** of **Figure 4****.**

Graph **600** presents dynamic optical transmittance measurements during the first several cycles of reversible electroplating and dissolution of Cu onto ITO in an ethylene glycol-based electrolyte with an introduced acid as a stripping agent. Transmittance is reduced as copper film forms and recovers as it is dissolved. Using a stripping agent in the non-aqueous electrolyte enables successfully deposition and dissolving repeatedly with no apparent degradation. Adding acid to the electrochromic results in repeatable plating (darkening) and stripping (clearing or lightening).

Electrochemical deposition and dissolution of Cu in ethylene glycol (EG) -based electrolyte with added acid is shown in graph **600.** The experimental setup is the same as in graph **500,** the only difference being the addition of 10 mM methanesulfonic acid (MSA) to the electrolyte. With the addition of MSA, electrochemical dissolution is no longer inhibited by the passivation of the Cu film described in graph **500** of **Figure 5****.** The pH has been reduced to the point that Cu²⁺ is the dominant species under oxidizing voltage, which is soluble in EG. The dissolution rate appears stable over multiple cycles. A stable reversible electrochemical deposition and dissolution has been performed over >100 cycles (not depicted). Adding a pH modifier as a stripping agent prevents the passivation of the Cu metal layer in this reversible electrochromic mirror device.

Graph **600** has y-axis **602** of transmittance in percentage and x-axis **604** of time in seconds. Three different stages of operation, deposition **606,** rest **608,** and dissolution **610** are depicted in graph **600.** During deposition **606,** an applied voltage deposits the metal into a metal layer. During rest **608,** the current state is maintained. During dissolution **610,** a polarity of the applied voltage is reversed, to dissolve the copper. Data **611** presents measurements of transmittance for the reversible metal deposition device with a stripping additive.

In graph **600,** four cycles of the reversible metal deposition device are depicted. Deposition **606** includes deposition **614,** deposition **622,** deposition **630,** and deposition **638.** Rests **608** are between deposition **606** and dissolution **610.** Rests **608** include rest **612,** rest **616,** rest **620,** rest **624,** rest **628,** rest **632,** rest **636,** rest **640,** and rest **644.**

Dissolution **610** includes dissolution **618,** dissolution **626,** dissolution **634,** and dissolution **642.** Although transmittance and time are not identical for each cycle, after each of dissolution **618,** dissolution **626,** dissolution **634,** and dissolution **642,** transmittance is approximately **100%.** Additionally, although transmittance and time are not identical for each cycle, each of dissolution **618,** dissolution **626,** dissolution **634,** and dissolution **642** is performed over less than two minutes. Further, although transmittance and time are not identical for each cycle, each of dissolution **618,** dissolution **626,** dissolution **634,** and dissolution **642** is performed in the range of approximately 50 seconds to approximately 110 seconds.

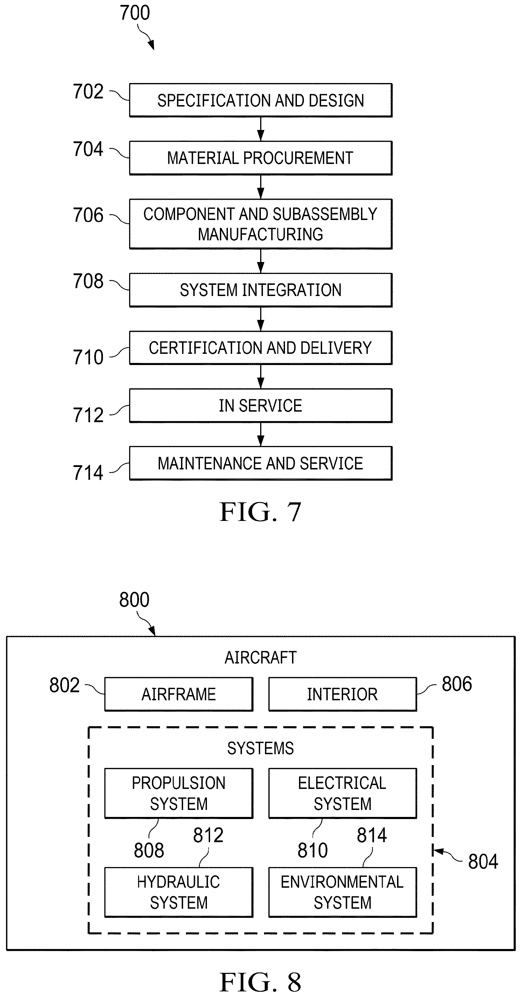

Illustrative examples of the present disclosure may be described in the context of aircraft manufacturing and service method **700** as shown in **Figure 6** and aircraft **800** as shown in **Figure 8****.** Turning first to **Figure 7****,** an illustration of an aircraft manufacturing and service method in a form of a block diagram is depicted in accordance with an illustrative example. During pre-production, aircraft manufacturing and service method **700** may include specification and design **702** of aircraft **800** in **Figure 8** and material procurement **704.**

During production, component and subassembly manufacturing **706** and system integration **708** of aircraft **800** takes place. Thereafter, aircraft **800** may go through certification and delivery **710** in order to be placed in service **712.** While in service **712** by a customer, aircraft **800** is scheduled for routine maintenance and service **714,** which may include modification, reconfiguration, refurbishment, or other maintenance and service.

Each of the processes of aircraft manufacturing and service method **700** may be performed or carried out by a system integrator, a third party, and/or an operator. In these examples, the operator may be a customer. For the purposes of this description, a system integrator may include, without limitation, any number of aircraft manufacturers and major-system subcontractors; a third party may include, without limitation, any number of vendors, subcontractors, and suppliers; and an operator may be an airline, a leasing company, a military entity, a service organization, and so on.

With reference now to **Figure 8****,** an illustration of an aircraft in a form of a block diagram is depicted in which an illustrative example may be implemented. In this example, aircraft **800** is produced by aircraft manufacturing and service method **700** of **Figure 6** and may include airframe **802** with plurality of systems **804** and interior **806.** Examples of systems **804** include one or more of propulsion system **808,** electrical system **810,** hydraulic system **812,** and environmental system **814.** Any number of other systems may be included.

Apparatuses and methods embodied herein may be employed during at least one of the stages of aircraft manufacturing and service method **700.** One or more illustrative examples may be manufactured or used during at least one of component and subassembly manufacturing **706,** system integration **708,** in service **712,** or maintenance and service **714** of **Figure 7****.**

As used herein, the phrase "at least one of," when used with a list of items, means different combinations of one or more of the listed items may be used and only one of each item in the list may be needed. For example, "at least one of item A, item B, or item C" may include, without limitation, item A, item A and item B, or item B. This example also may include item A, item B, and item C or item B and item C. Of course, any combinations of these items may be present. In other examples, "at least one of" may be, for example, without limitation, two of item A; one of item B; and ten of item C; four of item B and seven of item C; or other suitable combinations. The item may be a particular object, thing, or a category. In other words, at least one of means any combination items and number of items may be used from the list but not all of the items in the list are required.

As used herein, "a number of," when used with reference to items means one or more items.

The flowcharts and block diagrams in the different depicted examples illustrate the architecture, functionality, and operation of some possible implementations of apparatuses and methods in an illustrative example. In this regard, each block in the flowcharts or block diagrams may represent at least one of a module, a segment, a function, or a portion of an operation or step.

In some alternative implementations of an illustrative example, the function or functions noted in the blocks may occur out of the order noted in the figures. For example, in some cases, two blocks shown in succession may be executed substantially concurrently, or the blocks may sometimes be performed in the reverse order, depending upon the functionality involved. Also, other blocks may be added in addition to the illustrated blocks in a flowchart or block diagram. Some blocks may be optional.

The illustrative examples present reversible metal deposition devices. Using a non-aqueous electrolyte enables adjustable reflective windows with up to twenty times less heat absorbed, low and high temperature stability, and desirably rapid dynamic optical transmittance.

Adding a stripping additive in a non-aqueous electrochromic system, such as silver or zinc, aids in maintaining the desirably rapid dynamic optical transmittance. The stripping additive acid stops passivation of the metal layer and enables it to remain electrochemically active during cycling.

The illustrative examples present reversible metal deposition devices with an adjustable reflective treatment for airplane windows that reduces power, thermal constraints, and switching speed. The illustrative examples reversibly plate metal on a window to reflect out instead of absorbing unwanted light. The illustrative examples can reduce absorbed light up to twenty times.

Further examples are set out in the clauses below:
1. A reversible metal deposition device comprising:
   a transparent conductive electrode;
   a counter electrode;
   an electrolyte between the transparent conductive electrode and the counter electrode, the electrolyte containing less than 5 atomic percent water;
   a stripping additive in the electrolyte, the stripping additive comprising at least one of an acid or a base; and
   metal salt in the electrolyte that supplies metal to be reversibly deposited onto the transparent conductive electrode.
2. The reversible metal deposition device of clause 1, wherein the metal salt comprises one of silver, copper, zinc, gold, cobalt, nickel, palladium, lead, bismuth, tin, aluminum, iron, gallium, indium, platinum, or tungsten.
3. The reversible metal deposition device of clause 1, wherein the metal salt comprises one of a chloride, a nitrate, a perchlorate, a sulfate, a sulfite, a fluoride, an iodide, or a bromide.
4. The reversible metal deposition device of any one of the preceding clauses, wherein the electrolyte comprises an organic material selected from one of DMSO, sulfolane, ethylene glycol, propylene carbonate, ethylene carbonate, or dimethyl formamide.
5. The reversible metal deposition device of any one of clauses 1-3, wherein the electrolyte comprises an ionic liquid.
6. The reversible metal deposition device of any one of the preceding clauses, wherein the electrolyte comprises less than 1 atomic percent water.
7. The reversible metal deposition device of any one of the preceding clauses, wherein the electrolyte comprises less than 100 parts per million water.
8. The reversible metal deposition device of any one of the preceding clauses, wherein the stripping additive comprises at least one of methane sulfonic acid, formic acid, glacial acetic acid, sulfuric acid, or perchloric acid.
9. The reversible metal deposition device of any one of the preceding clauses, wherein the stripping additive comprises at least one of ammonia or an amine.
10. The reversible metal deposition device of any one of the preceding clauses, wherein the transparent conductive electrode comprises one of an indium tin oxide electrode or a fluorine-doped tin oxide electrode on a substrate, wherein the substrate is a glass sheet or a polymer sheet.
11. The reversible metal deposition device of any one of clauses 1-9, wherein the transparent conductive electrode comprises a metal grid on a substrate, wherein the substrate is a glass sheet or a polymer sheet.
12. The reversible metal deposition device of any one of clauses 1-9, wherein the transparent conductive electrode comprises at least one of graphene or carbon nanotubes on a substrate, wherein the substrate is a glass sheet or a polymer sheet.
13. The reversible metal deposition device of any one of the preceding clauses, further comprising:
   a wetting layer on the transparent conductive electrode.
14. The reversible metal deposition device of any one of the preceding clauses, wherein the reversible metal deposition device is a selectively darkening window, the selectively darkening window further comprising:
   a reflective material on an outer surface of the selectively darkening window.
15. A reversible metal deposition device comprising:
   a transparent conductive electrode comprising one of a glass sheet or a polymer sheet;
   a counter electrode;
   an electrolyte between the transparent conductive electrode and the counter electrode, the electrolyte containing less than 5 atomic percent water;
   a stripping additive in the electrolyte, the stripping additive comprising an acid;
   metal salt in the electrolyte that supplies metal to be reversibly deposited onto the transparent conductive electrode; and
   a second substrate comprising a second glass sheet or a second polymer sheet.
16. The reversible metal deposition device of clause 15, wherein the metal salt comprises one of silver or copper.
17. The reversible metal deposition device of clause 15 or 16, wherein the stripping additive is methane sulfonic acid.
18. The reversible metal deposition device of clause 15, wherein the electrolyte comprises one of DMSO or propylene carbonate.
19. A reversible metal deposition device comprising:
   a transparent conductive electrode;
   a counter electrode;
   an electrolyte in contact with the transparent conductive electrode, the electrolyte containing less than 5 atomic percent water;
   metal salt in the electrolyte that supplies metal to be reversibly deposited onto the transparent conductive electrode, the metal salt comprising one of copper or silver; and
   a stripping additive in the electrolyte, the stripping additive comprising at least one of an acid or a base configured to stop passivation of a metal layer formed on the transparent conductive electrode when the metal is deposited on the transparent conductive electrode.
20. The reversible metal deposition device of clause 19, wherein the stripping additive is methane sulfonic acid, and wherein the electrolyte comprises one of DMSO or propylene carbonate.

The description of the different illustrative examples has been presented for purposes of illustration and description, and is not intended to be exhaustive or limited to the examples in the form disclosed. Many modifications and variations will be apparent to those of ordinary skill in the art. Further, different illustrative examples may provide different features as compared to other illustrative examples. The example or examples selected are chosen and described in order to best explain the principles of the examples, the practical applications, and to enable others of ordinary skill in the art to understand the disclosure for various examples with various modifications as are suited to the particular use contemplated.

## Claims

1. A reversible metal deposition device (200, 300, 400) comprising:
a transparent conductive electrode (206, 308, 408);
a counter electrode (208, 302, 410);
an electrolyte (210, 304, 412) between the transparent conductive electrode (206, 308, 408) and the counter electrode (208, 302, 410), the electrolyte (210, 304, 412) containing less than 5 atomic percent water (292);
a stripping additive (212) in the electrolyte (210, 304, 412), the stripping additive (212) comprising at least one of an acid (266) or a base (268); and
metal salt (214) in the electrolyte (210, 304, 412) that supplies metal (240) to be reversibly deposited onto the transparent conductive electrode (206, 308, 408).

2. The reversible metal deposition device (200, 300, 400) of claim 1, wherein the metal salt (214) comprises one of silver (246), copper (247), zinc (248), gold (249), cobalt (250), nickel (251), palladium (252), lead (253), bismuth (254), tin (255), aluminum, iron, gallium, indium, platinum, or tungsten.

3. The reversible metal deposition device (200, 300, 400) of claim 1, wherein the metal salt (214) comprises one of a chloride (258), a nitrate (259), a perchlorate (260), a sulfate (262), a sulfite (263), a fluoride (264), an iodide (261), or a bromide (265).

4. The reversible metal deposition device (200, 300, 400) of any one of the preceding claims, wherein the electrolyte (210, 304, 412) comprises an organic material (278) selected from one of DMSO (280), sulfolane, ethylene glycol (282), propylene carbonate (283), ethylene carbonate (284), or dimethyl formamide (285).

5. The reversible metal deposition device (200, 300, 400) of any one of claims 1-3, wherein the electrolyte (210, 304, 412) comprises an ionic liquid (286).

6. The reversible metal deposition device (200, 300, 400) of any one of the preceding claims, wherein the electrolyte (210, 304, 412) comprises less than 1 atomic percent water (292); or optionally
wherein the electrolyte (210, 304, 412) comprises less than 100 parts per million water (292).

7. The reversible metal deposition device (200, 300, 400) of any one of the preceding claims, wherein the stripping additive (212) comprises at least one of methane sulfonic acid (270), formic acid (271), glacial acetic acid (272), sulfuric acid (273), or perchloric acid (274).

8. The reversible metal deposition device (200, 300, 400) of any one of claims 1-6, wherein the stripping additive (212) comprises at least one of ammonia (276) or an amine.

9. The reversible metal deposition device (200, 300, 400) of any one of the preceding claims, wherein the transparent conductive electrode (206, 308, 408) comprises one of an indium tin oxide electrode or a fluorine-doped tin (255) oxide electrode on a substrate (218, 404), wherein the substrate (218, 404) is a glass sheet (222, 226) or a polymer sheet (224, 228).

10. The reversible metal deposition device (200, 300, 400) of any one of claims 1-8, wherein the transparent conductive electrode (206, 308, 408) comprises a metal (240) grid on a substrate (218, 404), wherein the substrate (218, 404) is a glass sheet (222, 226) or a polymer sheet (224, 228).

11. The reversible metal deposition device (200, 300, 400) of any one of claims 1-8, wherein the transparent conductive electrode (206, 308, 408) comprises at least one of graphene (238) or carbon nanotubes (236) on a substrate (218, 404), wherein the substrate (218, 404) is a glass sheet (222, 226) or a polymer sheet (224, 228); or optionally
further comprising:
a wetting layer (288) on the transparent conductive electrode (206, 308, 408); or optionally
wherein the reversible metal deposition device (200, 300, 400) is a selectively darkening window (204, 401), the selectively darkening window (204, 401) further comprising:
a reflective material (294, 406) on an outer surface (296) of the selectively darkening window (204, 401).

12. The reversible metal deposition device (200, 300, 400) of claim 1, wherein
the transparent conductive electrode (206, 308, 408) comprises one of a glass sheet (222, 226) or a polymer sheet (224, 228);
the stripping additive (212) comprising the acid (266); and further comprising
a second substrate (218, 404) (220, 402) comprising a second glass sheet (222, 226) or a second polymer sheet (224, 228).

13. The reversible metal deposition device (200, 300, 400) of claim 12, wherein the metal salt (214) comprises one of silver (246) or copper (247); or optionally
wherein the stripping additive (212) is methane sulfonic acid (270); or optionally
wherein the electrolyte (210, 304, 412) comprises one of DMSO (280) or propylene carbonate (283).

14. The reversible metal deposition device (200, 300, 400) of claim 1, wherein
the electrolyte (210, 304, 412) is in contact with the transparent conductive electrode (206, 308, 408),
the metal salt (214) comprising one of copper (247) or silver (246); and
the stripping additive (212) is configured to stop passivation (244) of a metal (240) layer (288) formed on the transparent conductive electrode (206, 308, 408) when the metal (240) is deposited on the transparent conductive electrode (206, 308, 408).

15. The reversible metal deposition device (200, 300, 400) of claim 14, wherein the stripping additive (212) is methane sulfonic acid (270), and wherein the electrolyte (210, 304, 412) comprises one of DMSO (280) or propylene carbonate (283).
